# EUROPEAN PATENT SPECIFICATION

(11) **EP 2 291 473 B1**
(45) Date of publication and mention of the grant of the patent: **17.08.2016**
(21) Application number: 09770916.6
(22) Date of filing: 24.06.2009
(51) Int. Cl.: C09D 183/04, C09J 183/04, B32B 15/08

(54) **METHOD OF FORMING A CURABLE ADHESIVE TAPE AND AN INSULATING LAYER ON A CONDUCTIVE SUBSTRATE**
VERFAHREN ZUR FORMUNG EINES HÄRTBAREN KLEBEBANDS UND EINER ISOLIERENDEN SCHICHT AUF EINEM LEITFÄHIGEN SUBSTRAT
PROCÉDÉ DE FABRICATION D'UN RUBAN ADHÉSIF DURCISSABLE ET D'UNE COUCHE ISOLANTE SUR UN SUPPORT CONDUCTEUR

(30) Priority: 26.06.2008 US 75937 P
(43) Date of publication of application: 09.03.2011
(73) Proprietor: Dow Corning Corporation, Midland, Michigan 48686-0994 (US)
(72) Inventor: ANDERSON, Wayne, H., Bristol NH 03222 (US); COULTER, Jerry, W., Altamont NY 12009 (US); DILLON, Robert, T., Niskayuna NY 12309 (US); DIPINO, Michael, A., North Branford CT 06471 (US); MASTERS, Matthew, V., Saginaw MI 48604 (US); RAPSON, Lawrence, Joseph, Bay City MI 48708 (US)
(74) Representative: Donlan, Andrew Michael
(86) International application number: PCT/US2009/048399
(87) International publication number: WO 2009/158383

(56) References cited:
- WO-A1-2007/057318
- WO-A1-2009/084726
- JP-A- H0 665 509
- JP-A- 2007 191 629
- US-A- 4 128 909
- US-A1- 2007 299 216
- US-B1- 6 225 433

## Description

### FIELD OF THE INVENTION

The present invention generally relates to a method of forming a curable adhesive tape and, more particularly, to a method of forming the curable adhesive tape from a silicone composition and to a method of forming an insulating layer on a conductive substrate.

### DESCRIPTION OF THE RELATED ART

Silicone compositions are well known in the art and can be cross-linked via a variety of reaction routes. For example, the silicone compositions can be cross-linked via a moisture cure reaction, i.e., room-temperature vulcanization, a peroxide or heat-activated radical cure reaction, i.e., high-temperature vulcanization, and/or a transition metal-catalyzed hydrosilylation (or addition) cure reaction. Based on the components present in, or utilized to form, the silicone compositions, as well as the particular reaction route employed to cross-link the silicone compositions, physical and chemical properties of the silicone compositions can be altered. As such, the silicone compositions can be exploited in a plethora of diverse applications and can form a variety of end products.

One example of an application in which a silicone composition is utilized is in the method of forming electrical insulating tape, which is commonly referred to in the industry as "turn-to-turn" tape. The electrical insulating tape is applied to substrates, i.e., electrical conductors, such as bus bars and windings in electrical generators. Bus bars are used with electricity distribution networks and related switchgear, and typically have portions of exposed metal for providing electrical conductivity and portions of insulated metal, i.e., metal coated with the electrical insulating tape. The electrical insulating tape can comprise manly different materials, such as epoxy, polyvinylidene fluoride, polyethylene terephthalate, and the like. However, due to the desirable and excellent properties of silicone compositions, forming the electrical insulating tape from silicone compositions is preferred.

Current methods for forming electrical insulating tape are labor intensive and inefficient. To form the electrical insulating tape, a reaction intermediary is formed in a drum. The reaction intermediary is heavily solvated, typically requiring up to and in excess of 70% solvents, which are discretely added. A fiberglass cloth is submerged in the reaction intermediary such that the fiberglass cloth is coated with the reaction intermediary. The reaction intermediary must then be cured to form the electrical insulating tape.

To cure the reaction intermediary, the fiberglass cloth, which is coated with the reaction intermediary, is passed through a vertical oven. Several different zones or stages are required to provide the temperatures necessary to cure the reaction intermediary in the vertical oven. Alternatively, multiple ovens can be utilized, further increasing the cost and time required to cure the reaction intermediary. The first zone or first oven heats the reaction intermediary to a temperature that is sufficient to drive off the solvent. The second zone or second oven heats the reaction intermediary to partially cure reaction intermediary, and, finally, the third zone or third oven further cures the reaction intermediary. The requirement of multiple ovens or multiple stages increases fixed costs associated with curing the reaction intermediary. In addition, due to the time that is necessary to sufficiently evaporate the solvent that is initially present in the reaction intermediary, the fiberglass cloth must be passed through the vertical oven at a slow rate of speed, typically less than eight feet per minute. Evaporation of the solvent results in the release of volatile organic compounds, which are heavily regulated for a wide variety of reasons. Therefore, the solvent is typically burned from the volatile organic compounds, which is cost and resource intensive. Further, the second zone or second oven heats the reaction intermediary, once free from solvent, to partially cure the reaction intermediary. At this point, the partially cured reaction intermediary is not fully cross-linked. The fiberglass cloth, having the partially cured reaction intermediary thereon, is then cut into strips to form the insulating tape and is wrapped about a spindle. An interliner may be disposed on the partially cured reaction intermediary prior to wrapping the insulating tape about the spindle to prevent the insulating tape from adhering to itself.

Once the interliner is disposed on the partially cured reaction intermediary and the fiberglass cloth is wrapped about the spindle, the insulating tape must be refrigerated to prevent the partially cured reaction intermediary from fully curing over time and losing the ability to adhere to the substrate. If the partially cured reaction intermediary is fully cured prior to being disposed on the substrate, the insulating tape would not be capable of being applied on the substrate, such as the bus bar, because the insulating tape would be a hardened mass. Therefore, refrigeration further burdens the process as it limits and makes more expensive shipping and distribution of the insulating tape to third parties who apply the insulating tape on the substrate. The third parties typically apply the insulating tape by removing the interliner and wrapping the insulating tape about the substrate such that edges of the insulating tape overlap. Then, the third parties fully cure the partially cured reaction intermediary by heat to form the fully cured reaction intermediary, which adheres to itself at the overlapping edges of the insulating tape and also adheres to the substrate, thereby forming the insulating layer on the substrate.

Another silicone composition is formed via platinum catalysis of a two component system including a first component and a second component. The first component includes a vinyl siloxane and platinum. The second component includes a hydrogen siloxane and a peroxide. The first and second components are reacted at an elevated temperature. The hydrogen siloxane cross-links the vinyl siloxane. Therefore, the hydrogen siloxane is utilized in a stoichiometric excess to the vinyl siloxane to ensure that the vinyl siloxane is a limiting reactant such that all of the vinyl groups in the vinyl siloxane are reacted. However, the reaction between the vinyl siloxane and the stoichiometric excess of the hydrogen siloxane goes to completion in a single stage after being initiated. Due to the fact that the reaction goes to completion in a single stage, a partially cured reaction intermediary cannot be formed and subsequently stored and/or disposed on the substrate. Therefore, silicone compositions formed from a vinyl siloxane and a hydrogen siloxane are not ideal for insulating tape.

In view of the foregoing, it would be advantageous to provide an improved method for forming an insulating tape from a silicone composition while eliminating burdens associated with solvents. It would be further advantageous to provide an improved method of forming an insulating layer on a substrate.

### SUMMARY OF THE INVENTION AND ADVANTAGES

The present invention provides a method of forming a curable adhesive tape and a method of forming an insulating layer on a conductive substrate. The curable adhesive tape is formed from a silicone composition, which is substantially free from solvent and comprises an alkenyl siloxane, a hydrogen siloxane, a metallic hydrosilylation catalyst, and an initiating agent. The method of forming the curable adhesive tape comprises the step of applying the silicone composition onto a flexible substrate. The method of forming the curable adhesive tape also comprises the step of heating the silicone composition to a temperature of from 118 to 128°C for a first period of time to form a partially cured reaction intermediary such that unreacted alkenyl groups remain in the partially cured reaction intermediary of the curable adhesive tape. The partially cured reaction intermediary is non-blocking.

The method of forming the insulating layer on the conductive substrate comprises the steps utilized in forming the curable adhesive tape. The method of forming the insulating layer on the conductive substrate further comprises the step of disposing the flexible substrate having the partially cured reaction intermediary on the conductive substrate. In addition, the method of forming the insulating layer on the conductive substrate comprises the step of further heating the partially cured reaction intermediary to a temperature of from 135 to 200°C for a second period of time to fully cure the partially cured reaction intermediary, thereby forming the insulating layer on the conductive substrate.

The method of forming the curable adhesive tape of the present invention utilizes a silicone composition that is substantially free from solvent, eliminating any volatile organic compounds from being emitted during the method of forming the curable adhesive tape. In addition, the partially cured reaction intermediary of the curable adhesive tape is in solid form and can, therefore, be easily handled. The partially cured reaction intermediary of the curable adhesive tape is non-blocking and, as such, the curable adhesive tape can be wrapped and stored without the need for an interliner prior to the step of further heating the partially cured reaction intermediary to fully cure the partially cured reaction intermediary. Further, the partially cured reaction intermediary does not require refrigeration to prevent the partially cured reaction intermediary from fully curing. The method of forming the insulating layer on the conductive substrate of the present invention forms an insulating layer having excellent dielectric properties and excellent adherence to the conductive substrate.

### BRIEF DESCRIPTION OF THE DRAWINGS

Other advantages of the present invention will be readily appreciated, as the same becomes better understood by reference to the following detailed description when considered in connection with the accompanying drawings wherein:

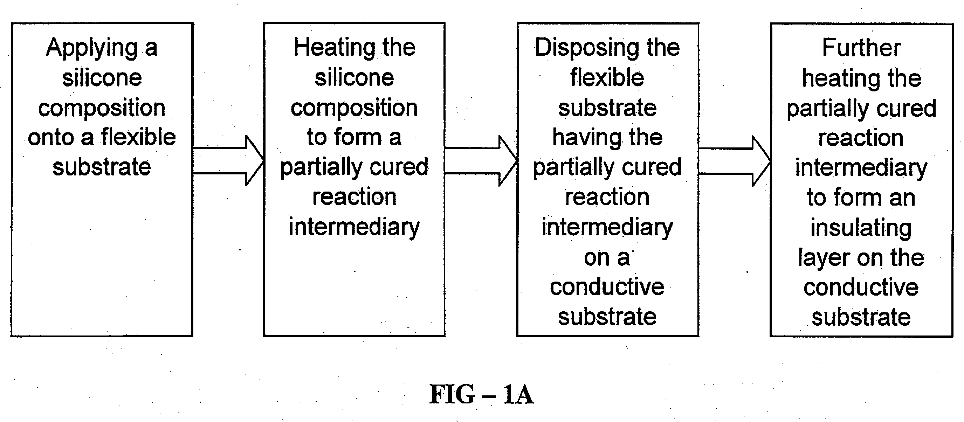

Figure 1A is a flow diagram generally illustrating a method according to the present invention;

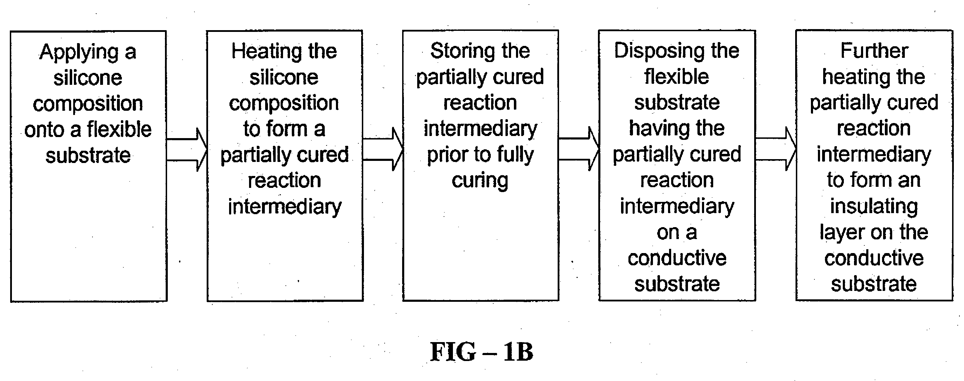

Figure 1B is a flow diagram generally illustrating an alternative method according to the present invention; and

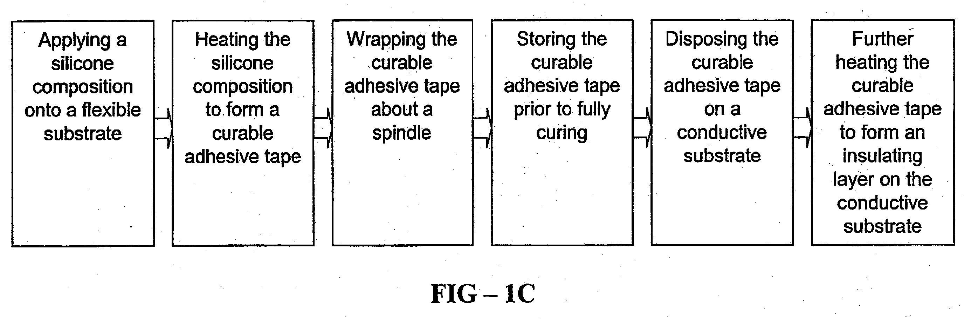

Figure 1C is flow diagram generally illustrating a preferred method according to the present invention where a curable adhesive tape is formed.

### DETAILED DESCRIPTION OF THE INVENTION

The present invention provides a curable adhesive tape and a method of forming the curable adhesive tape from a silicone composition. The present invention also provides a method of forming an insulating layer on a conductive substrate. The curable adhesive tape of the present invention is suitable for use as an insulating tape, e.g. an electrical insulating tape, to form the insulating layer on the conductive substrate, such as a bus bar. However, it is to be appreciated that the curable adhesive tape of the present invention is not limited to forming the insulating layer; for example, the curable adhesive tape of the present invention may be utilized in coating or bonding applications.

The silicone composition of the present invention may be a one component system or may be formed from a two component system. For descriptive purposes only, the following description focuses on the one component system. However, certain features of the two component system are also described below. The silicone composition of the present invention is what is commonly referred to in the industry as a liquid silicone rubber and has a viscosity such that the silicone composition is self-leveling, i.e., pourable. The silicone composition is substantially free from solvent. "Substantially free from solvent," as used herein, is to be interpreted as free from any solvent discretely and/or separately added to the silicone composition. For example, certain components present in the silicone composition may be provided as a solute dissolved and/or dispersed in a solvent without departing from the scope of the present invention. However, the silicone composition is free from any solvents not typically utilized in concert with or present with components present in the silicone composition. The silicone composition may comprise solvent in an amount typically less than 1.0, more typically less than 0.5, most typically 0.1 percent by weight based on the total weight of the silicone composition without departing from the definition of substantially free from solvent.

The silicone composition comprises an alkenyl siloxane. It is to be appreciated that a blend of alkenyl siloxanes, i.e., two or more different types of alkenyl siloxanes, may be utilized. In the industry, alkenyl siloxanes are more generally referred to as organopolysiloxanes. The alkenyl siloxane may be any siloxane comprising an Si-O-Si group, i.e., a silicon-based group, and at least one alkenyl group bonded to at least one silicon atom of the silicon-based group, i.e., at least one silicon-bonded alkenyl group. It is to be appreciated that the silicon-based group may comprise repeating units and/or may comprise any number of silicon and oxygen atoms. In addition, it is to be appreciated that the silicon-based group may be linear, branched, cyclic, and any combination thereof. The alkenyl group may be any group having at least one C=C bond. For example, the alkenyl group may be vinyl, allyl, methallyl, butenyl, hexenyl, octenyl, decenyl, cycohexenyl and styryl. For illustrative purposes only, Formula 1 below exemplifies an alkenyl siloxane wherein the alkenyl group is pending from the silicon-based group, which is a repeating unit. 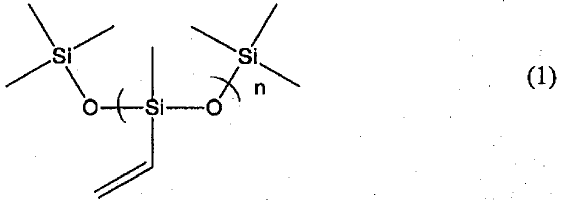 It is to be appreciated that the alkenyl group may be located at any interval and/or location along the silicon-based group. For example, the alkenyl siloxane may be an alkenyl-terminated siloxane, i.e., the alkenyl group may be located at one or more terminal ends of the silicon-based group. Alternatively, the alkenyl siloxane may be an alkenyl-pendent siloxane, i.e., the alkenyl group may be pending from the silicon-based group at a location along a backbone of the silicon-based group other than at the terminal ends. In addition, the alkenyl siloxane may have at least one alkenyl group located at at least one of the terminal ends of the silicon-based group and at least one alkenyl group pending from the silicon-based group at the location along the backbone of the silicon-based group, i.e., the alkenyl siloxane may be alkenyl-terminated and alkerryl-pendent. The alkenyl siloxane may also comprise other functional and/or nonfunctional groups in addition to the alkenyl group, such as a hydrocarbyl group. For illustrative purposes only, Formula 2 below exemplifies an alkenyl-terminated siloxane.

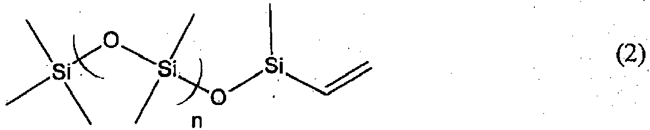

As set forth above, the alkenyl siloxane may comprise the alkenyl-terminated siloxane. When the alkenyl siloxane comprises the alkenyl-terminated siloxane, the alkenyl group is located at at least one terminal end of the silicon-based group. The alkenyl-terminated siloxane may be linear, branched, cyclic, or any combination thereof. For example, the silicon-based group of the alkenyl-terminated siloxane may comprise a repeating D unit, i.e., R¹₂SiO_{2/2}, having an M unit, i.e., R²₃SiO_{1/2,} located at each of the terminal ends of the repeating D unit, wherein each R¹ is an organic group and each R² is the same as or different from R¹; however, at least one R² comprises the alkenyl group. In addition, the alkenyl-terminated siloxane may further comprise a siloxane having the general formula R³SiO_{3/2}, SiO_{4/2}, and any combination thereof, wherein R³ is an organic group that is the same as or different from R¹ and R². The alkenyl group may comprise a carbon chain pending directly from at least one terminal end of the silicon-based group and having from two to twelve carbon atoms with at least one C=C bond. Preferably, the C=C bond is located at an end of the carbon chain, such as vinyl, 5-hexenyl and 7-octenyl. In addition, the alkenyl group is not limited to one C=C bond; the alkenyl group of the alkenyl-terminated siloxane may comprise more than one C=C bond. Further, it is to be appreciated that more than one alkenyl group may be present in the alkenyl-terminated siloxane. The more than one alkenyl group may be bonded to the same atom within the same terminal end of the silicon-based group or, alternatively, may be bonded to different atoms in different terminal ends of the silicon-based group. In certain embodiments, the alkenyl-terminated siloxane comprises dimethylvinylsiloxy-terminated dimethyl siloxane and/or dimethylvinylsiloxy-terminated dimethyl methylvinyl siloxane.

In certain embodiments, the alkenyl siloxane further comprises the alkenyl-pendent siloxane. The alkenyl-pendent siloxane comprises at least one alkenyl group pending from any location along the silicon-based group other than at one of the terminal ends of the silicon-based group. The alkenyl-pendent siloxane may be linear, branched, cyclic or any combination thereof. For example, the silicon-based group of the alkenyl-pendent siloxane may comprise a repeating D unit, i.e., R⁴₂SiO_{2/2}, having an M unit, i.e., R⁵₃SiO_{1/2}, located at each of the terminal ends of the repeating D unit, wherein at least one R⁴ is the alkenyl group and R⁵ is an organic group. The alkenyl group may comprise a carbon chain pending from the backbone of the silicon-based group and having from two to twelve carbon atoms with at least one C=C bond. Preferably, the C=C bond is located at an end of the carbon chain, such as vinyl, 5-hexenyl and 7-octenyl. In addition, the alkenyl group is not limited to one C=C bond; the alkenyl group of the alkenyl-pendent siloxane may comprise more than one C=C bond. Further, it is to be appreciated that more than one alkenyl group may be present in the alkenyl-pendent siloxane. The more than one alkenyl group may be bonded to the same atom within the silicon-based group or, alternatively, may be bonded to different atoms in the silicon-based group. One nonlimiting example of such an alkenyl siloxane is trimethylsiloxy-terminated dimethyl methylvinyl siloxane.

On average, the alkenyl siloxane typically has at least two alkenyl groups per molecule of the alkenyl siloxane. The alkenyl siloxane is typically present in the silicone composition in an amount of from 45 to 85, more typically from 55 to 75, most typically from 60 to 70 percent by weight based on the total weight of the silicone composition.

The silicone composition further comprises a metallic hydrosilylation catalyst. The metallic hydrosilylation catalyst may be any catalyst suitable for a hydrosilylation reaction. The metallic hydrosilylation catalyst may comprise metals including, but not limited to, platinum, rhodium, palladium, ruthenium, and iridium. In certain embodiments of the present invention, the metallic hydrosilylation catalyst is platinum. The metallic hydrosilylation catalyst may be provided in any form. For example, the metallic hydrosilylation catalyst may be in powder form to maximize the surface area contact. Alternatively, the metallic hydrosilylation catalyst may be provided via a carrier component, such as a fine particle carrier, e.g. alumina particles, silica particles and carbon particles. In addition, the metallic hydrosilylation catalyst may comprise platinum-olefin complexes or may be microencapsulated, such as platinum encapsulated with a diphenylsiloxane. An encapsulated platinum is of particular use when the silicone composition is the one component rather than when the silicone composition is formed form the two component system. When the metallic hydrosilylation catalyst comprises platinum, examples of the metallic hydrosilylation catalyst suitable for the purposes of the present invention include, but are not limited to, chloroplatinic acid; platinum compounds with unsaturated organic compounds; complexes of platinum compounds with unsaturated organic compounds; platinum compounds with siloxanes having at least one ethylenically unsaturated group; complexes of platinum compounds with siloxanes having at least one ethylenically unsaturated group; complexes of platinuous halides with divinyldisiloxane; complexes of chloroplatinic acid with divinyldisiloxane; the reaction product of chloroplatinic acid, divinyltetramethyldisiloxane and tetramethyldisiloxane; and combinations thereof.

The metallic hydrosilylation catalyst is typically present in the silicone composition in an amount of from 2 to 250, more typically from 5 to 100, most typically from 7 to 17 parts by weight per million parts of the total weight of the silicone composition. It is to be appreciated that the quantitative values for the metallic hydrosilylation catalyst are set forth as the actual parts per million of the metal which the metallic hydrosilylation catalyst comprises, i.e., the quantitative values do not include weights of any carriers, solvents, etc.

The silicone composition further comprises a hydrogen siloxane. It is to be appreciated that a blend of hydrogen siloxanes, i.e., two or more different types of hydrogen siloxanes, may be utilized. In the industry, hydrogen siloxanes are typically referred to as organohydrogenpolysiloxanes. The hydrogen siloxane may be any siloxane comprising a second Si-O-Si group, i.e., a second silicon-based group, and at least one hydrogen atom bonded to at least one silicon atom of the second silicon-based group, i.e., at least one silicon-bonded hydrogen group. It is to be appreciated that the second silicon-based group may comprise repeating units and/or may comprise any number of silicon and oxygen atoms. The hydrogen siloxane may be linear, branched, cyclic, or any combination thereof. For illustrative purposes only, Formula 3 below exemplifies a hydrogen siloxane. 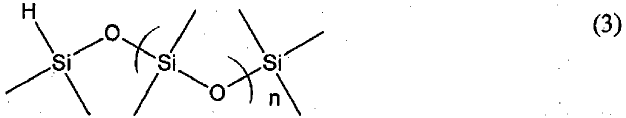 It is to be appreciated that the hydrogen atom may be located at any interval and/or location along the second silicon-based group. For example, the hydrogen atom may be located at one or more terminal ends of the second silicon-based group. Alternatively, the hydrogen atom may be pending from the second silicon-based group at a location along a backbone of the second silicon-based group other than at one of the terminal ends. In addition, the hydrogen siloxane may have a hydrogen atom located at one or more terminal ends of the second silicon-based group and a hydrogen atom pending from the second silicon-based group at a location along the backbone of the second silicon-based group. When the hydrogen siloxane comprises two or more hydrogen atoms, the two or more hydrogen atoms may be bonded to the same silicon atom in the second silicon-based group. Alternatively, each of the two or more hydrogen atoms maybe bonded to different silicon atoms in the second silicon-based group. For illustrative purposes only, Formula 4 below exemplifies a hydrogen siloxane having the hydrogen atom pending from the second siloxane group and Formula 5 below exemplifies a hydrogen siloxane having the hydrogen atom located at a terminal end of the second silicon-based group. 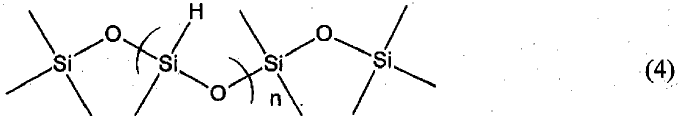 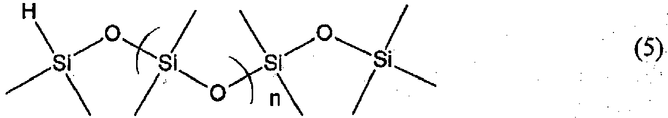 In certain embodiments, the hydrogen siloxane comprises an alkyl-terminated hydrogen siloxane. Alkyl-terminated hydrogen siloxanes suitable for the purposes of the present invention include, but are not limited to, trimethylsiloxy-terminated dimethyl, methylhydrogen siloxane, methylhydrogen siloxane with methylsilsesquioxane, dimethylhydrogensiloxy-modified silica, and combinations thereof.

The hydrogen siloxane is present in the silicone composition in an amount that is sufficient to impart the silicone composition with a deficiency of silicon-bonded hydrogen groups to silicon-bonded alkenyl groups. For example, at an elevated temperature, the alkenyl siloxane and the hydrogen siloxane react with one another in the presence of the metallic hydrosilylation catalyst. However, in the present invention, the amount of the hydrogen siloxane utilized in the silicone composition is such that the hydrogen siloxane is a limiting reactant and, as such, unreacted alkenyl groups remain after a hydrosilylation reaction between the hydrogen siloxane and the alkenyl siloxane. The hydrosilylation reaction between the hydrogen siloxane and the alkenyl siloxane in the presence of the metallic hydrosilylation catalyst is described in greater detail below with regard to the method of forming the curable adhesive tape.

On average, the hydrogen siloxane of the silicone composition typically has at least two silicon-bonded hydrogen groups, preferably at least three silicon-bonded hydrogen groups, per molecule of the hydrogen siloxane. The silicone composition typically has a molar ratio of silicon-bonded hydrogen groups to silicon-bonded alkenyl groups of from 0.70 to 1.1 : 1.0; more typically from 0.80 to 1.0 : 1.0; most typically from 0.85 to 0.95 :1. The molar ratio of silicon-bonded hydrogen groups to silicon-bonded alkenyl groups imparts the silicone composition with the deficiency of silicon-bonded hydrogen groups to silicon-bonded alkenyl groups. The hydrogen siloxane is typically present in the silicone composition in an amount of from 0.25 to 6.0, more typically from 0.75 to 2.0, most typically from 1.10 to 1.40 percent by weight based on the total weight of the silicone composition.

The silicone composition further comprises an initiating agent. It is to be appreciated that a blend of initiating agents, i.e., two or more different types of initiating agents, may be utilized. In certain embodiments, the initiating agent comprises an organic peroxide. However, it is to be appreciated that initiating agents other than the organic peroxide may be utilized. For example, the initiating agent may be a free radical initiating agent or aphoto initiating agent. The organic peroxide may be any organic peroxide known in the art having at least one oxygen-oxygen (O-O) single bond, typically having the general formula R-O-O-R¹. The organic peroxide is utilized for a high-temperature vulcanization reaction. The high-temperature vulcanization reaction involves the organic peroxide and the unreacted alkenyl siloxane groups, which remain after the hydrosilylation reaction between the alkenyl siloxane and the hydrogen siloxane, as is described in greater detail below with regard to the method of forming the curable adhesive tape. Organic peroxides that initiate the high temperature vulcanization reaction at higher temperatures are preferred because these organic peroxides allow for the hydrosilylation reaction between the alkenyl siloxane and the hydrogen siloxane in the presence of the metallic hydrosilylation catalyst without having the high temperature vulcanization reaction initiated. Organic peroxides suitable for the purposes of the present invention include, but are not limited to, dicumyl peroxide and tert-butylperoxybenzoate. For illustrative purposes only, dicumyl peroxide is exemplified in Formula 6 below. 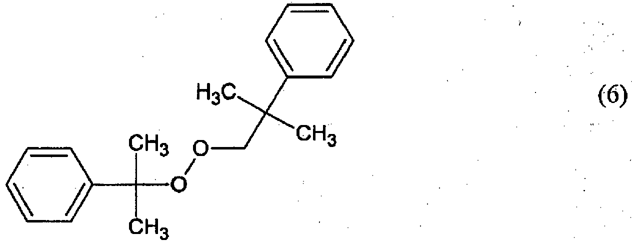 It is to be appreciated that the organic peroxide may utilize a carrier that is inert. When the organic peroxide utilizes the carrier, it may only be partially active, such as a 40% active organic peroxide. The carrier may be, for example, calcium carbonate and/or silica. An example of a carrier-based organic peroxide is Trigonox® 101-45B-PD, commercially available from Akzo Nobel Polymer Chemicals LLC of Chicago, IL.

The initiating agent or, if utilized, the blend of initiating agents, is typically present in the silicone composition in an amount of from 0.2 to 1.0, more typically from 0.3 to 0.8, most typically from 0.5 to 0.7 percent by weight based on the total weight of the silicone composition.

In certain embodiments of the present invention, the silicone composition further comprises an adhesion promoting agent. It is to be appreciated that a blend of adhesion promoting agents, i.e., two or more different types of adhesion promoting agents, may be utilized. The adhesion promoting agent is utilized to increase adhesion between the curable adhesive tape and the conductive substrate, as is described in greater detail below with regard to the method of forming the insulating layer on the conductive substrate. Typically, the adhesion promoting agent comprises an epoxy functional silane. Epoxy functional silanes suitable for the purposes of the present invention include, but are not limited to, vinyl tris(tert-butylperoxy) silane, triphenyl tert-butylperoxy silane, trimethyl tert-butylperoxy silane, methyl vinyl di(tert-butylperoxy) silane, vinyl trimethoxy silane, vinyl triethoxy silane, glycidoxypropyl trimethoxy silane and methacryloxypropyl trimethoxy silane.

When present in the silicone composition, the adhesion promoting agent or, if utilized, the blend of adhesion promoting agents, is typically present in an amount of from 0.25 to 6.0, more typically from 0.50 to 3.0, most typically from 1.0 to 2.0 percent by weight based on the total weight of the silicone composition.

In certain embodiments of the present invention, the silicone composition further comprises a hydroxy-terminated siloxane. The hydroxy-terminated siloxane is also an adhesion promoting agent; however, the hydroxy-terminated siloxane serves the additional purpose of facilitating the inclusion of filling agents, which are described in greater detail below, in the silicone composition. Another example of a component which serves the purpose of facilitating the inclusion of filling agents is hexamethyl disilazane. An example of a hydroxy-terminated siloxane suitable for the purposes of the present invention is hydroxy-terminated dimethyl, methylvinyl siloxane.

When present in the silicone composition, the hydroxy-terminated siloxane is typically present in an amount of from 0.05 to 2.0, more typically from 0.10 to 1.25, most typically from 0.55 to 0.95 percent by weight based on the total weight of the silicone composition.

In certain embodiments of the present invention, the silicone composition further comprises an inhibiting agent. It is to be appreciated that a blend of inhibiting agents, i.e., two or more different types of inhibiting agents, may be utilized. The inhibiting agent increases a pot life of the silicone composition, i.e., the inhibiting agent at least partially minimizes a rate of reaction between the alkenyl siloxane and the initiating agent. Examples of inhibiting agents suitable for the purposes of the present invention include, but are not limited to, alkylcyclosiloxanes, olefinic substituted organosiloxanes, acetylenic alcohol, bis (2-methoxy-1-methylethyl) maleate, and combinations thereof. In certain embodiments, the alkylcylosiloxane comprises cyclic methylvinylsiloxane, such as tetramethyltetravinylcyclotetrasiloxane. It is to be appreciated that the inhibiting agent may be utilized in concert with an alkenyl polymer without departing from the scope of the present invention. For example, when the inhibiting agent is the alkylcyclosiloxane, the alkylcyclosiloxane may be introduced into the silicone composition via a solution comprising the alkylcyclosiloxane and a siloxane polymer.

When present in the silicone composition, the inhibiting agent or, if utilized, the blend of inhibiting agents, is typically present in an amount of from 0.005 to 1.0, more typically from 0.05 to 0.5, most typically from 0.05 to 0.1 percent by weight based on the total weight of the silicone composition.

In certain embodiments of the present invention, the silicone composition further comprises a filling agent. The filling agent is typically selected from the group of a reinforcing filling agent, an extending filling agent, and combinations thereof.

When the extending filling agent is utilized in the silicone composition, the extending filling agent is typically used to impart an end product, such as the insulating layer formed from the curable adhesive tape, with an improved physical property. For example, the extending filling agent may be utilized to improve dielectric strength, resistance to electrical tracking, and inflammability of the insulating layer formed from the curable adhesive tape. Examples of extending filling agents suitable for the purposes of the present invention include aluminum trihydrate, ground quartz, wollastonite, calcium carbonate, and combinations thereof; however, it is to be appreciated that additional extending filling agents may be utilized in the silicone composition without departing from the scope of the present invention. Further, a blend of extending filling agents, i.e., two or more different types of extending filling agents, may be utilized.

When present in the silicone composition, the extending filling agent or, if utilized, the blend of extending filling agents, is typically present in an amount of from 1 to 40, more typically from 5 to 30, most typically from 10 to 20 percent by weight based on the total weight of the silicone composition.

When the reinforcing filling agent is utilized, the reinforcing filling agent is typically used to impart the end product, such as the insulating layer formed from the curable adhesive tape, with increased strength and durability, as well as improved tensile strength, modulus, tear strength and abrasion resistance. The reinforcing filling agent is typically selected from the group of fumed silica, precipitated silica, dimethylvinylated silica, trimethylated silica, and combinations thereof; however, it is to be appreciated that additional reinforcing filling agents may be utilized in the silicone composition. Further, a blend of reinforcing filling agents, i.e., two or more different types of reinforcing filling agents, may be utilized.

When present in the silicone composition, the reinforcing filling agent or, if utilized, the blend of reinforcing filling agents, is typically present in an amount of from 0.5 to 35, more typically from 2.5 to 15, most typically from 5 to 10 percent by weight based on the total weight of the silicone composition.

It is to be appreciated that in addition to the reinforcing filling agent and the extending flling agent set forth above, additional filling agents, such as pigments, dyes, plasticizers, etc. may be utilized in the silicone composition.

As set forth above, in certain embodiments of the present invention, the silicone composition is formed from the two component system, i.e., the silicone composition is formed from a first component and a second component which are combined to form the silicone composition.

When the silicone composition is formed from the two component system, the first component typically comprises a first alkenyl siloxane and the metallic hydrosilylation catalyst. The first component of the two component system is typically formed in a vessel. In certain embodiments, the first alkenyl siloxane is heated in the vessel to a temperature of about 110 °C for a period of time of about 30 minutes. The temperature of the vessel is then lowered, during which the metallic hydrosilylation catalyst is mixed therein. Once the metallic hydrosilylation catalyst is mixed in the vessel with the first alkenyl siloxane, the first component may be removed from the vessel and packaged.

When the silicone composition is formed from the two component system, the second component typically comprises a second alkenyl siloxane, the hydrogen siloxane, and the initiating agent. The second alkenyl siloxane of the second component may be the same as or different from the first alkenyl siloxane of the first component. The second component of the two component system is typically formed in a vessel. The second alkenyl siloxane, the hydrogen siloxane, and the initiating agent may be disposed in the vessel in any order, typically at ambient temperature, and are typically mixed for about 30 minutes. After mixing the second alkenyl siloxane, the hydrogen siloxane, and the initiating agent to form the second component, the second component may be packaged.

It is to be appreciated that when the silicone composition is formed from the two component system, each of the adhesion promoting agent, the hydroxy-terminated siloxane, the inhibiting agent, the reinforcing filling agent, and the extending filling agent may be present in the first component only, the second component only, or the first and the second component of the two component system.

The present invention also provides a method of forming the curable adhesive tape. When the silicone composition is formed from the two component system, the method comprises the step of combining the first component and the second component of the two component system to form the silicone composition, which has an excess of silicon-bonded alkenyl groups to silicon-bonded hydrogen groups. Generally, the silicone composition is unreacted; however, it is to be appreciated that the silicone composition may be partially reacted. The excess of silicon-bonded alkenyl groups to silicon-bonded hydrogen groups is attributable to the number of the silicon-bonded hydrogen groups present in the hydrogen siloxane and the amount of hydrogen siloxane utilized in the silicone composition. Prior to reacting, the ratio of the silicon-bonded hydrogen groups to the silicon-bonded alkenyl groups in the silicone composition is most typically from 0.85 : 1 to 0.95 : 1, as set forth above. When the silicone composition is formed from the two component system, the first component and the second component may be combined in a vessel, such as a drum. The first component and the second component are typically combined such that the silicone composition is homogenous. The vessel may have a mixing mechanism, e.g. a mixing blade, to combine the first component and the second component of the two component system. Alternatively, the first component and the second component may be manually combined in the vessel or the first component and the second component may be metered and continuously combined via an in-line static mixer.

The method of forming the curable adhesive tape comprises the step of applying the silicone composition onto a flexible substrate. In certain embodiments, the flexible substrate is a textile. The textile comprises fibers, such as glass fibers. The term textile, as used herein, is to be interpreted as any form of cloth, whether non-woven, woven, beaten, knitted or plaited. An example of a textile which comprises glass fibers suitable for the purposes of the present invention is a woven fiberglass cloth. The silicone composition can be applied to the flexible substrate by numerous techniques, such as by at least one metering blade, by submerging the flexible substrate in the silicone composition, by pouring the silicone composition on the flexible substrate, by spraying the silicone composition on the flexible substrate, etc. In one embodiment, the silicone composition is disposed in an elongated trough and the flexible substrate is passed therethrough while the flexible substrate is submerged in the silicone composition. The flexible substrate typically becomes coated and/or impregnated with the silicone composition. The process of applying the silicone composition onto the flexible substrate can be a batch process, a semi-batch process, or a continuous process.

The method of forming the curable adhesive tape further comprises the step of heating the silicone composition to a first temperature for a first period of time to form the curable adhesive tape comprising a partially cured reaction intermediary such that the unreacted alkenyl groups remain in the partially cured reaction intermediary of the curable adhesive tape. The phrase "partially cured reaction intermediary," as used herein, refers to the silicone composition after the hydrosilylation reaction between the alkenyl siloxane and the hydrogen siloxane in the silicone composition, but prior to the high temperature vulcanization reaction between the unreacted alkenyl groups that remain in the partially cured reaction intermediary after the hydrosilylation reaction and the initiating agent. The first temperature is of from 118 to 125 °C. Below 118 °C, blocking occurs, in which the partially cured reaction intermediary may be pulled from the flexible substrate as the flexible substrate having the partially cured reaction intermediary is passed over rollers. The term "blocking," as used herein, is to be interpreted as adhesion between objects. It is to be appreciated that the partially cured reaction intermediary may still be tacky while being defined as non-blocking. Therefore, the term "non-blocking" refers to the fact that the partially cured reaction intermediary is not pulled from the flexible substrate, even when the partially cured reaction intermediary is at least partially tacky. For example, when blocking occurs, the partially cured reaction intermediary adheres to the rollers and is thus pulled from the flexible substrate. This results in an undesirable build up of the partially cured reaction intermediary on the rollers as well as a decreased quality of the curable adhesive tape and the insulating layer formed from the curable adhesive tape. Above 125 °C, the adhesion promoting agent may be driven from the silicone composition. This results in undesirable adhesion of the curable adhesive tape formed from the silicone composition to the conductive substrate. The first temperature of from 118 °C to 125 °C does not have any adverse impact on the curable adhesive tape formed from the silicone composition and is sufficient to initiate the hydrosilylation reaction between the alkenyl siloxane and the hydrogen siloxane present in the silicone composition. In addition, the first temperature of from 118 °C to 125 °C is not sufficient to induce the high temperature vulcanization reaction between the unreacted alkenyl groups in the partially cured reaction intermediary and the initiating agent. While heated to the first temperature, the silicon-bonded hydrogen groups of the hydrogen siloxane react with the silicon-bonded alkenyl groups of the alkenyl siloxane, thereby forming the partially cured reaction intermediary having the unreacted allcenyl groups. The partially cured reaction intermediary is non-blocking and does not stick and/or accumulate on rollers. As set forth above, it is to be appreciated that the amount of the hydrogen siloxane present in the silicone composition is limited such that the unreacted alkenyl groups remain in the partially cured reaction intermediary of the curable adhesive tape. The first desired time during which the silicone composition is heated to form the partially cured reaction intermediary is typically from 120 to 450, more typically from 150 to 300, most typically from 200 to 225 seconds.

The silicone composition may be heated to the first temperature in any manner known in the art to transmit heat to an object so long as the temperature can be controlled to that set forth above. For example, the silicone composition may be placed in and/or through an oven or placed in a microwave. In certain embodiments, the silicone composition is moved through a vertical oven. The silicone composition may be heated in the vertical oven while the silicone composition is stationary; alternatively, the silicone composition may be heated while the silicone composition is in motion relative to the vertical oven. In certain embodiments, the flexible substrate having the silicone composition is moved generally vertically through the vertical oven contemporaneous with the step of heating the silicone composition to the first temperature for the first desired period of time. The silicone composition is typically continuously fed through the vertical oven at a speed of from 5 to 30, more typically from 10 to 25, most typically from 15 to 20 feet per minute. It is to be appreciated that the speed at which the silicone composition is continuously fed through the vertical oven is a function of the height of the vertical oven and, as such, the speed imparts a specific residence time of partially curing the silicone composition to form the partially cured reaction intermediary. Therefore, the speed at which the silicone composition is moved through the vertical oven and the height of the vertical oven are direction proportional.

In certain embodiments, the method of forming the curable adhesive tape further comprises the step of wrapping the flexible substrate having the partially cured reaction intermediary, i.e., the curable adhesive tape, about a spindle to further process and/or package the curable adhesive tape. The curable adhesive tape does not require an interliner to prevent self-bonding of the curable adhesive tape. In certain embodiments, the step of wrapping the curable adhesive tape may be part of a continuous process immediately proceeding the step of heating the silicone composition to the first desired temperature to form the partially cured reaction intermediary. In other words, the curable adhesive tape is wrapped about the spindle at a rate generally equivalent to the rate at which the flexible substrate is moved through the vertical oven. The curable adhesive tape can be stored prior to an end use of the curable adhesive tape without the need for refrigeration of the curable adhesive tape.

In certain embodiments, the method of forming the curable adhesive tape further comprises the step of cutting the curable adhesive tape into at least one strip, i.e., one or more strips. The flexible substrate is typically much wider than what is desirable for curable adhesive tape, and an increased and more efficient output can be achieved by utilizing the flexible substrate that is wide and subsequently cutting the curable adhesive tape to a more desirable width. The step of cutting the curable adhesive tape into the at least one strip may be performed prior to wrapping the curable adhesive tape about the spindle. Alternatively, the step of cutting the curable adhesive tape into the at least one strip may be performed after wrapping the curable adhesive tape about the spindle.

The present invention also provides a method of forming the insulating layer on the conductive substrate from the silicone composition. The method of forming the insulating layer on the conductive substrate comprises the steps set forth above for forming the curable adhesive tape. The method further comprises the step of disposing the flexible substrate having the partially cured reaction intermediary, i.e., the curable adhesive tape, on the conductive substrate. The conductive substrate is typically an electrical conductor, such as an alloy or a metal. Typical conductive substrates include electrical bus bars, traction motors, and other electrical connections and/or electrodes. In one embodiment, the conductive substrate is copper. The step of disposing the flexible substrate having the partially cured reaction intermediary typically comprises wrapping the flexible substrate having the partially cured reaction intermediary about the conductive substrate. The step of wrapping the flexible substrate having the partially cured reaction intermediary about the conductive substrate may be an automated process or may be manually disposed. Typically, the flexible substrate is wrapped about the conductive substrate such that edges of the flexible substrate overlap. When the edges of the flexible substrate overlap, the insulating layer formed form the curable adhesive tape is continuous, i.e., there are no gaps in the insulating layer. One application of the curable adhesive tape is commonly referred to in the industry as "turn-to-turn" tape.

The method of forming the insulating layer on the conductive substrate further comprises the step of further heating the partially cured reaction intermediary to a second temperature for a second period of time to fully cure the partially cured reaction intermediary, thereby forming the insulating layer on the conductive substrate. It is to be appreciated that the step of further heating the partially cured reaction intermediary to fully cure the partially cured reaction intermediary typically comprises the high temperature vulcanization reaction between the unreacted alkenyl groups and the initiating agent in the partially cured reaction intermediary. The step of further heating the partially cured reaction intermediary to the second temperature for the second period of time may be carried out in a different geographic location as well as on a date later in time from the step of heating the silicone composition to the first desired temperature for the first period of time. For example, when the curable adhesive tape is wrapped about the spindle, the curable adhesive tape may be stored and shipped to third parties prior to the step of further heating the curable adhesive tape comprising the partially cured reaction intermediary to the second temperature for the second period of time.

The second temperature is of from 135 to 200, more typically from 135 to 175, most typically from 140 to 160 °C. The partially cured reaction intermediary is typically heated at the second temperature for the second period of time of from 5 to 45, more typically from 8 to 30, most typically from 10 to 20 minutes. It is to be appreciated that the second period of time does not include the time during which the partially cured reaction intermediary and the conductive substrate are heated to reach the second temperature. Therefore, the second period of time only includes the time during which the partially cured reaction intermediary and the conductive substrate are heated after attaining the second temperature. The second temperature is sufficient to initiate the high temperature vulcanization reaction between the unreacted alkenyl groups in the partially cured reaction intermediary and the initiating agent. The high temperature vulcanization reaction fully cures the partially cured reaction intermediary, i.e., fully cross-links the partially cured reaction intermediary, thereby forming the insulating layer on the conductive substrate. The high temperature vulcanization reaction between the initiating agent and the unreacted alkenyl groups also causes the edges of the flexible substrate to adhere to one another. When the conductive substrate is copper, the insulating layer typically has an adhesion to the copper of at least 2.0, more typically at least 2.5, most typically at least 2.7 psi as measured by ASTM D413 (i.e., 13.8 KPa, 17.25 KPa or 18.63 KPa), wherein the insulating layer is peeled at 2 inches per minute (5.08 cm/min) at an angle of 180°. The adherence of the insulating layer to the copper is the force required to remove the insulating layer from the copper, measured in pounds per square inch (1psi = 6.9 KPa).

The step of further heating the partially cured reaction intermediary may be accomplished via any manner known to heat an object. For example, the flexible substrate having the partially cured reaction intermediary and the conductive substrate may be placed in an oven and heated to the second temperature. Alternatively, a current may be passed through the conductive substrate such that the partially cured reaction intermediary is further heated via resistance heating. Alternatively, the partially cured reaction intermediary may be further heated via compression molding or an autoclave.

The following examples, illustrating the method of forming the curable adhesive tape and the method of forming the insulating layer on the conductive substrate, are intended to illustrate and not to limit the invention.

### EXAMPLES

A silicone composition is formed from a two component system which comprises a first component and a second component. The first component and the second component are separately formed. Each respective composition for the first component and the second component of the two component system is exemplified below.

### Example 1

The amount and type of each component used to form the first component and the second component of the two component system for Example 1 is indicated in Table I below with all values in parts by weight based on 100 parts by weight of the first component and the second component prior to reaction unless otherwise indicated.

**Table I**

| | **Example 1** | |
|---|---|---|
| | First Component | Second Component |
| Alkenyl siloxane 1 | 51.00 | 78.44 |
| Alkenyl siloxane 2 | 0.72 | -- |
| Alkenyl siloxane 3 | -- | 1.63 |
| Alkenyl siloxane 4 | -- | -- |
| Alkenyl siloxane 5 | -- | -- |
| Hydrogen siloxane | -- | 2.55 |
| Adhesion promoting agent 1 | -- | 0.81 |
| Adhesion promoting agent 2 | -- | 0.80 |
| Hydroxy-terminated siloxane | -- | 0.76 |
| Filling agent 1 | | -- |
| Filling agent 2 | 15.71 | -- |
| Filling agent 3 | -- | 13.24 |
| Filling agent 4 | -- | 0.79 |
| Inhibiting agent 1 | -- | 0.43 |
| Inhibiting agent 2 | -- | -- |
| Initiating agent 1 | -- | 0.53 |
| Initiating agent 2 | -- | -- |
| PL-fluid | -- | - |
| Water | | -- |
| Metallic hydrosilylation catalyst | 0.37 | -- |
| Total: | 100.00 | 100.00 |

Alkenyl siloxane 1 is an alkenyl-terminated siloxane having an average molecular weight of 24,000 and an average viscosity of 2,000 centipoise at 23 °C.

Alkenyl siloxane 2 is an allcenyl-terminated and alkenyl-pendent siloxane having an average molecular weight of 46,000 and an average viscosity of 15,000 centipoise at 23 °C.

Alkenyl siloxane 3 is an alkenyl-terminated siloxane having an average molecular weight of 9,500 and an average viscosity of 350 centipoise at 23 °C.

Alkenyl siloxane 4 is an alkenyl-terminated siloxane having an average molecular weight of 106,000 and an average viscosity of 60,000 centipoise at 23 °C.

Alkenyl siloxane 5 is an alkenyl-terminated siloxane-having an average molecular weight of 9,500 and an average viscosity of 450 centipoise at 23 °C.

Hydrogen siloxane is trimethylsioxy-terminated dimethyl, methylhydrogen siloxane.

Adhesion promoting agent 1 is methacryloxypropyltrimethoxysilane.

Adhesion promoting agent 2 is glycidoxypropyltrimethoxysilane.

Hydroxy-terminated siloxane is hydroxy-terminated dimethyl, methylvinyl siloxane.

Filling agent 1 is stearate-treated calcium carbonate.

Filling agent 2 is alumina trihydrate.

Filling agent 3 is fumed silica.

Filling agent 4 is calcium carbonate.

Inhibiting agent 1 is methylvinylcyclic siloxane.

Inhibiting agent 2 is bis (2-methoxy-1-methylethyl) maleate.

Initiating agent 1 is dicumyl peroxide.

Initiating agent 2 is tert-butylperoxybenzoate.

PL-fluid is hexamethyl disilazane.

Metallic hydrosilylation catalyst is platinum with tetramethyldivinyldisloxane.

Referring now to Table I, the first component of the two component system is typically formed in a vessel. The alkenyl siloxane 1, the alkenyl siloxane 2, the filling agent 1, and the filling agent 2 are mixed until homogenous and heated in the vessel to a temperature of about 110 °C for a period of time of about 30 minutes. The temperature of the vessel is then lowered, during which the metallic hydrosilylation catalyst is mixed therein. Once the metallic hydrosilylation catalyst is mixed in the vessel, the first component is removed from the vessel.

The second component of the two component system is typically formed in a vessel. The alkenyl siloxane 1, the alkenyl siloxane 3, the inhibiting agent 1, the filling agent 3, and the filling agent 4 are mixed in the vessel until homogenous. The hydrogen siloxane is then mixed in the vessel. The initiating agent 1 is then added to the vessel. Finally, the adhesion promoting agent 1, the adhesion promoting agent 2, and the hydroxy-terminated siloxane are mixed in the vessel. All of the components of the second component of the two component system are mixed for about 30 minutes at ambient temperature. The second component can then be removed from the vessel.

A method of forming a curable adhesive tape comprises the step of combining the first component and the second component. The first and second components are mixed in a 1 : 1 ratio via an in-line static mixer to form a silicone composition. The silicone composition is disposed in a trough, and a fiberglass cloth is passed through the trough such that the fiberglass cloth becomes coated with the silicone composition. The fiberglass cloth having the silicone composition is passed through a vertical oven extending upwardly for about 30 feet (9.144 m) at a rate of approximately 20 feet per minute (6.096 m/min). The vertical oven heats the silicone composition to form a partially cured reaction intermediary having unreacted alkenyl groups, i.e., the curable adhesive tape. The curable adhesive tape passes over two 90° rollers and moves in a downward direction after passing the second of the two 90° rollers. The curable adhesive tape is wrapped about a spindle for storage.

To form an insulating layer on a conductive substrate, the curable adhesive tape is unwrapped from the spindle and wrapped about a copper substrate such that edges of the curable adhesive tape overlap. The curable adhesive tape is heated at a temperature of about 150 °C for a time of about 15 minutes, thereby forming the insulating layer on the copper substrate.

### Example 2

The amount and type of each component used to form the first component and the second component of the two component system for Example 2 is indicated in Table II below with all values in parts by weight based on 100 parts by weight of the first component and the second component prior to reaction unless otherwise indicated.

**Table II**

| | **Example 2** | |
|---|---|---|
| | First Component | Second Component |
| Alkenyl siloxane 1 | 51.00 | -- |
| Alkenyl siloxane 2 | 0.72 | 0.70 |
| Alkenyl siloxane 3 | -- | 0.97 |
| Alkenyl siloxane 4 | -- | 39.90 |
| Alkenyl siloxane 5 | -- | 37.93 |
| Hydrogen siloxane | -- | 2.50 |
| Adhesion prompting agent 1 | -- | 0.80 |
| Adhesion promoting agent 2 | -- | 2.00 |
| Hydroxy-terminated siloxane | -- | 1.05 |
| Filling agent 1 | 32.20 | -- |
| Filling agent 2 | 15.71 | -- |
| Filling agent 3 | -- | 10.36 |
| Filling agent 4 | -- | |
| Inhibiting agent 1 | -- | 0.04 |
| Inhibiting agent 2 | -- | 0.10 |
| Initiating agent 1 | -- | 1.30 |
| Initiating agent 2 | -- | 0.10 |
| PL-fluid | -- | 1.74 |
| Water | -- | 0.52 |
| Metallic hydrosilylation catalyst | 0.37 | -- |
| Total: | 100.00 | 100.00 |

Referring now to Table II, the first component of the two component system is formed in the same manner as the first component of the two component system of Example 1.

The second component of the two component system is typically formed in a vessel. The alkenyl siloxane 2, the alkenyl siloxane 3, the alkenyl siloxane 4, the alkenyl siloxane 5, the diol, the PL-fluid, the water, the inhibiting agent 1, the inhibiting agent 2, and the filling agent 3 are mixed in the vessel until homogenous. The hydrogen siloxane is then mixed in the vessel. The initiating agent 1 and the initiating agent 2 are then added to the vessel. Finally, the adhesion promoting agent 1, the adhesion promoting agent 2, and the hydroxy-terminated siloxane are mixed in the vessel. All of the components of the second component of the two component system are mixed for about 30 minutes at ambient temperature. The second component can then be removed from the vessel.

A method of forming a curable adhesive tape comprises the step of combining the first component and the second component. The first and second components are mixed in a 1 : 1 ratio via an in-line static mixer to form a silicone composition. The silicone composition is disposed in a trough, and a fiberglass cloth is passed through the trough such that the fiberglass cloth becomes coated with the silicone composition. The fiberglass cloth having the silicone composition is passed through a vertical oven extending upwardly for about 30 feet (9.144 m) at a rate of approximately 20 feet per minute (6.096 m/min). The vertical oven heats the silicone composition to form a partially cured reaction intermediary having unreacted alkenyl groups, i.e., the curable adhesive tape. The curable adhesive tape passes over two 90° rollers and moves in a downward direction after passing the second of the two 90° rollers. The curable adhesive tape is wrapped about a spindle for storage.

To form an insulating layer on a conductive substrate, the curable adhesive tape is unwrapped from the spindle and wrapped about a copper substrate such that edges of the curable adhesive tape overlap. The curable adhesive tape is heated at a temperature of about 150 °C for a time of about 15 minutes, thereby forming the insulating layer on the copper substrate.

### Example 3

The amount and type of each component used to form the first component and the second component of the two component system for Example 3 is indicated in Table III below with all values in parts by weight based on 100 parts by weight of the first component and the second component prior to reaction unless otherwise indicated.

**Table III**

| | **Example 3** | |
|---|---|---|
| | First Component | Second Component |
| Alkenyl siloxane 1 | 51.00 | -- |
| Alkenyl siloxane 2 | 0.72 | 0.69 |
| Alkenyl siloxane 3 | -- | 0.97 |
| Alkenyl siloxane 4 | -- | 37.35 |
| Alkenyl siloxane 5 | -- | 37.18 |
| Hydrogen siloxane | -- | 2.25 |
| Adhesion promoting agent 1 | -- | 2.00 |
| Adhesion promoting agent 2 | -- | 3.00 |
| Hydroxy-terminated siloxane | -- | -- |
| Filling agent 1 | 32.20 | -- |
| Filling agent 2 | 15.71 | -- |
| Filling agent 3 | -- | 12.57 |
| Filling agent 4 | -- | -- |
| Inhibiting agent 1 | -- | 0.04 |
| Inhibiting agent 2 | -- | 0.10 |
| Initiating agent 1 | -- | 1.30 |
| Initiating agent 2 | -- | 0.10 |
| PL-fluid | -- | 1.75 |
| Water | -- | 0.52 |
| Metallic hydrosilylation catalyst | 0.37 | -- |
| Total: | 100.00 | 100.00 |

Referring now to Table III, the first component of the two component system is formed in the same manner as the first component of the two component system of Example 1.

The second component of the two component system is typically formed in a vessel. The alkenyl siloxane 2, the alkenyl siloxane 3, the alkenyl siloxane 4, the alkenyl siloxane 5, the diol, the PL-fluid, the water, the inhibiting agent 1, the inhibiting agent 2, and the filling agent 3 are mixed in the vessel until homogenous. The hydrogen siloxane is then mixed in the vessel. The initiating agent 1 and the initiating agent 2 are then added to the vessel. Finally, the adhesion promoting agent 1, and the adhesion promoting agent 2 are mixed in the vessel. All of the components of the second component of the two component system are mixed for about 30 minutes at ambient temperature. The second component can then be removed from the vessel.

A method of forming a curable adhesive tape comprises the step of combining the first component and the second component. The first and second components are mixed in a 1 : 1 ratio via an in-line static mixer to form a silicone composition. The silicone composition is disposed in a trough, and a fiberglass cloth is passed through the trough such that the fiberglass cloth becomes coated with the silicone composition. The fiberglass cloth having the silicone composition is passed through a vertical oven extending upwardly for about 30 feet (9.144 m) at a rate of approximately 20 feet per minute (6.096 m/min). The vertical oven heats the silicone composition to form a partially cured reaction intermediary having unreacted alkenyl groups, i.e., the curable adhesive tape. The curable adhesive tape passes over two 90° rollers and moves in a downward direction after passing the second of the two 90° rollers. The curable adhesive tape is wrapped about a spindle for storage.

To form an insulating layer on a conductive substrate, the curable adhesive tape is unwrapped from the spindle and wrapped about a copper substrate such that edges of the curable adhesive tape overlap. The curable adhesive tape is heated at a temperature of about 150 °C for a time of about 15 minutes, thereby forming the insulating layer on the copper substrate. The insulating layer has an adhesion to the copper substrate of at least 2.9 psi (20.0 KPa) as measured by ASTM D413.

## Claims

1. A method of forming a curable adhesive tape comprising a partially cured reaction intermediary wherein the curable adhesive tape is formed from a silicone composition which is substantially free from solvent and comprises an alkenyl siloxane, a hydrogen siloxane, a metallic hydrosilylation catalyst, and an initiating agent, said method comprising the steps of:
• applying the silicone composition onto a flexible substrate; and
• heating the silicone composition to a first temperature of from 118 to 125°C for a first period of time to form the partially cured reaction intermediary such that unreacted alkenyl groups remain in the partially cured reaction intermediary of the curable adhesive tape,
wherein the partially cured reaction intermediary is non-blocking.

2. A method of forming an insulating layer on a conductive substrate from a silicone composition which is substantially free from solvent and comprises an alkenyl siloxane, a hydrogen siloxane, a metallic hydrosilylation catalyst, and an initiating agent, said method comprising the steps of:
• applying the silicone composition onto a flexible substrate;
• heating the silicone composition to a first temperature of from 118 to 125°C for a first period of time to form a partially cured reaction intermediary having unreacted alkenyl groups;
• disposing the flexible substrate having the partially cured reaction intermediary on the conductive substrate; and
• further heating the partially cured reaction intermediary to a second temperature of from 135 to 200°C for a second period of time to fully cure the partially cured reaction intermediary, thereby forming the insulating layer on the conductive substrate,
wherein the partially cured reaction intermediary is non-blocking.

3. A method as set forth in claim 1 or 2 wherein the step of heating the silicone composition to the first desired temperature for the first period of time is sufficient for a hydrosilylation reaction between the alkenyl siloxane and the hydrogen siloxane of the silicone composition, yet unreacted alkenyl groups remain in the partially cured reaction intermediary after the hydrosilylation reaction.

4. A method as set forth in any preceding claim wherein the initiating agent is not activated during the step of heating the silicone composition to the first desired temperature for the first period of time.

5. A method as set forth in any preceding claim wherein the silicone composition is a two component system comprising a first component which comprises the metallic hydrosilylation catalyst and the alkenyl siloxane, and a second component which comprises the hydrogen siloxane and the initiating agent.

6. A method as set forth in any preceding claim wherein the first period of time is of from 120 to 450 seconds.

7. A method as set forth in claim 2 or any one of claims 3 to 6 when dependent on claim 2 wherein the second period of time is from 5 to 45 minutes.

8. A method as set forth in claim 2 or any one of claims 3 to 7 when dependent on claim 2 wherein the conductive substrate comprises an alloy or a metal and/or is a bus bar.

9. A method as set forth in claim 2 or any one of claims 3 to 8 when dependent on claim 2 wherein the insulating layer has an adhesion to the conductive substrate of at least 2.0 psi (13,8 KPa), as measured according to ASTM D413.

10. A method as set forth in any preceding claim wherein the flexible substrate is textile which comprises fibres such as glass fibres.

11. An article comprising an insulating layer disposed on a conductive substrate, said insulating layer comprising a flexible substrate coated with the reaction product of:
• a partially cured reaction intermediary having unreacted alkenyl groups; and
• an initiating agent,
wherein the partially cured reaction intermediary is non-blocking.

12. An article as set forth in claim 11 wherein said partially cured reaction intermediary comprises the reaction product of:
• an alkenyl siloxane;
• a metallic hydrosilylation catalyst; and,
• a hydrogen siloxane.

13. An article as set forth in any one of claims 11 and 12 wherein said conductive substrate comprises an alloy or a metal and/or is a bus bar.

14. An article as set forth in any one of claims 11 through 13 wherein said insulating layer has an adhesion to said conductive substrate of at least 2.0 psi (13.8 KPa), as measured according to ASTM D413.

15. An article as set forth in any one of claims 11 through 14 wherein said flexible substrate is a textile which comprises fibres such as glass fibres.

16. An article as set forth in any one of claims 11 through 15 wherein said initiating agent comprises an organic peroxide.

17. A curable adhesive tape comprising:
• a flexible substrate coated with a partially cured reaction intermediary having unreacted alkenyl groups, wherein the partially cured reaction intermediary is non-blocking.

18. A curable adhesive tape as set forth in claim 17 wherein said partially cured reaction intermediary is the reaction product of a silicone composition which comprises:
• an alkenyl siloxane,
• a metallic hydrosilylation catalyst,
• a hydrogen siloxane, and
• an initiating agent.

19. A curable adhesive tape as set forth in any one of claims 17 and 18 wherein said flexible substrate is a textile which comprises fibres such as glass fibres.

## Patentansprüche

1. Verfahren zum Bilden eines härtbaren Klebebands, umfassend ein teilweise gehärtetes Reaktionsintermediat, wobei das härtbare Klebeband aus einer Silikonzusammensetzung gebildet wird, welches im Wesentlichen frei von Lösemittel ist und ein Alkenylsiloxan, ein Wasserstoffsiloxan, einen metallischen Hydrosilylierungskatalysator und ein Initüerungsmittel umfasst, wobei das Verfahren die folgenden Schritte umfasst:
• Auftragen der Silikonzusammensetzung auf ein elastisches Substrat; und
• Erhitzen der Silikonzusammensetzung auf eine erste Temperatur von 118 bis 125 °C für einen erste Zeitabschnitt, um das teilweise gehärtete Reaktionsintermediat derart zu bilden, dass unreagierte Alkenylgruppen im teilweise gehärteten Reaktionsintermediat des härtbaren Klebebands verbleiben,
wobei das teilweise gehärtete Reaktionsintermediat nicht-blockierend ist.

2. Verfahren zum Bilden einer Isolierschicht aus einer Silikonzusammensetzung auf einem leitfähigen Substrat, welches im Wesentlichen frei von Lösemittel ist und ein Alkenylsiloxan, ein Wasserstoffsiloxan, einen metallischen Hydrosilylierungskatalysator und ein Initiierungsmittel umfasst, wobei das Verfahren die folgenden Schritte umfasst:
• Auftragen der Silikonzusammensetzung auf ein elastisches Substrat;
• Erhitzen der Silikonzusammensetzung auf eine erste Temperatur von 118 bis 125 °C für einen ersten Zeitabschnitt, um ein teilweise gehärtetes Reaktionsintermediat mit unreagierten Alkenylgruppen zu bilden;
• Anordnen des elastischen Substrats mit dem teilweise gehärteten Reaktionsintermediat auf dem leitfähigen Substrat; und
• weiteres Erhitzen des teilweise gehärteten Reaktionsintermediats auf eine zweite Temperatur von 135 bis 200 °C für einen zweiten Zeitabschnitt, um das teilweise gehärtete Reaktionsintermediat gänzlich zu härten, wodurch die Isolierschicht auf dem leitfähigen Substrat gebildet wird,
wobei das teilweise gehärtete Reaktionsintermediat nicht-blockierend ist.

3. Verfahren wie in Anspruch 1 oder 2 dargelegt, wobei der Schritt des Erhitzens der Silikonzusammensetzung auf die erste gewünschte Temperatur für einen ersten Zeitabschnitt für eine Hydrosilylierungsreaktion zwischen dem Alkenylsiloxan und dem Wasserstoffsiloxan der Silikonzusammensetzung ausreichend ist, wobei nach der Hydrosilylierungsreaktion noch unreagierte Alkenylgruppen im teilweise gehärteten Reaktionsintermediat verbleiben.

4. Verfahren wie in einem der vorstehenden Ansprüche dargelegt, wobei das Initiierungsmittel während des Schrittes des Erhitzens der Silikonzusammensetzung auf die erste gewünschte Temperatur für den ersten Zeitabschnitt nicht aktiviert wird.

5. Verfahren wie in einem der vorstehenden Ansprüche dargelegt, wobei die Silikonzusammensetzung ein Zweikomponentensystem ist, umfassend eine erste Komponente, welche den metallischen Hydrosilylierungskatalysator und das Alkenylsiloxan umfasst, und umfassend eine zweite Komponente, welche das Wasserstoffsiloxan und das Initiierungsmittel umfasst.

6. Verfahren wie in einem der vorstehenden Ansprüche dargelegt, wobei der erste Zeitabschnitt von 120 bis 450 Sekunden beträgt.

7. Verfahren wie in Anspruch 2 oder einem der Ansprüche 3 bis 6, wenn abhängig von Anspruch 2, dargelegt, wobei der zweite Zeitabschnitt von 5 bis 45 Minuten beträgt.

8. Verfahren wie in Anspruch 2 oder einem der Ansprüche 3 bis 7, wenn abhängig von Anspruch 2, dargelegt, wobei das leitfähige Substrat eine Legierung oder ein Metall umfasst und/oder eine Sammelschiene ist.

9. Verfahren wie in Anspruch 2 oder einem der Ansprüche 3 bis 8, wenn abhängig von Anspruch 2, dargelegt, wobei die Isolierschicht eine Haftung an das leitfähige Substrat von mindestens 13,8 kPa (2,0 psi), wie gemäß ASTM D413 gemessen, aufweist.

10. Verfahren wie in einem der vorstehenden Ansprüche dargelegt, wobei das elastische Substrat ein Textil ist, welches Fasern, wie Glasfasern, umfasst.

11. Artikel, umfassend eine auf einem leitfähigen Substrat angeordnete Isolierschicht, wobei die Isolierschicht ein elastisches Substrat umfasst, das beschichtet ist mit dem Reaktionsprodukt von Folgendem:
• einem teilweise gehärteten Reaktionsintermediat mit unreagierten Alkenylgruppen; und
• einem Initiierungsmittel,
wobei das teilweise gehärtete Reaktionsintermediat nicht-blockierend ist.

12. Artikel wie in Anspruch 11 dargelegt, wobei das teilweise gehärtete Reaktionsintermediat das Reaktionsprodukt von Folgendem umfasst:
• einem Alkenylsiloxan;
• einem metallischen Hydrosilylierungskatalysator; und,
• einem Wasserstoffsiloxan.

13. Artikel wie in einem der Ansprüche 11 und 12 dargelegt, wobei das leitfähige Substrat eine Legierung oder ein Metall umfasst und/oder eine Sammelschiene ist.

14. Artikel wie in einem der Ansprüche 11 bis 13 dargelegt, wobei die Isolierschicht eine Haftung an das leitfähige Substrat von mindestens 13,8 kPa (2,0 psi), wie gemäß ASTM D413 gemessen, aufweist.

15. Artikel wie in einem der Ansprüche 11 bis 14 dargelegt, wobei das elastische Substrat ein Textil ist, welches Fasern, wie Glasfasern, umfasst.

16. Artikel wie in einem der Ansprüche 11 bis 15 dargelegt, wobei das Initiierungsmittel ein organisches Peroxid umfasst.

17. Härtbares Klebeband, umfassend:
• ein mit einem teilweise gehärteten Reaktionsintermediat mit unreagierten Alkenylgruppen beschichtetes elastisches Substrat, wobei das teilweise gehärtete Reaktionsintermediat nicht-blockierend ist.

18. Härtbares Klebeband wie in Anspruch 17 dargelegt, wobei das teilweise gehärtete Reaktionsintermediat das Reaktionsprodukt einer Silikonzusammensetzung ist, welche Folgendes umfasst:
• ein Alkenylsiloxan,
• einen metallischer Hydrosilylierungskatalysator,
• ein Wasserstoffsiloxan und
• ein Initiierungsmittel.

19. Härtbares Klebeband wie in einem der Ansprüche 17 und 18 dargelegt, wobei das elastische Substrat ein Textil ist, welches Fasern, wie Glasfasern, umfasst.

## Revendications

1. Procédé de formation d'un ruban adhésif durcissable comprenant un intermédiaire de réaction partiellement durci, dans lequel le ruban adhésif durcissable est formé à partir d'une composition de silicone qui est essentiellement dépourvue de solvant et comprend un alcényl-siloxane, un hydrogéno-siloxane, un catalyseur d'hydrosilylation métallique, et un agent initiateur, ledit procédé comprenant les étapes consistant à :
• appliquer la composition de silicone sur un substrat souple ; et
• chauffer la composition de silicone à une première température allant de 118 à 125 °C pendant une première période de temps pour former l'intermédiaire de réaction partiellement durci de telle sorte que des groupes alcényle n'ayant pas réagi restent dans l'intermédiaire de réaction partiellement durci du ruban adhésif durcissable,
dans lequel l'intermédiaire de réaction partiellement durci est non bloquant.

2. Procédé de formation d'une couche isolante sur un substrat conducteur à partir d'une composition de silicone qui est essentiellement dépourvue de solvant et comprend un alcényl-siloxane, un hydrogéno-siloxane, un catalyseur d'hydrosilylation métallique, et un agent initiateur, ledit procédé comprenant les étapes consistant à :
• appliquer la composition de silicone sur un substrat souple ;
• chauffer la composition de silicone à une première température allant de 118 à 125 °C pendant une première période de temps pour former un intermédiaire de réaction partiellement durci comportant des groupes alcényle n'ayant pas réagi ;
• disposer le substrat souple comportant l'intermédiaire de réaction partiellement durci sur le substrat conducteur ; et
• chauffer encore l'intermédiaire de réaction partiellement durci à une deuxième température allant de 135 à 200 °C pendant une deuxième période de temps pour durcir complètement l'intermédiaire de réaction partiellement durci, en formant de ce fait la couche isolante sur le substrat conducteur,
dans lequel l'intermédiaire de réaction partiellement durci est non bloquant.

3. Procédé selon la revendication 1 ou 2, dans lequel l'étape consistant à chauffer la composition de silicone à la première température souhaitée pendant la première période de temps est suffisante pour une réaction d'hydrosilylation entre l'alcényl-siloxane et l'hydrogéno-siloxane de la composition de silicone, mais des groupes alcényle n'ayant pas réagi restent dans l'intermédiaire de réaction partiellement durci après la réaction d'hydrosilylation.

4. Procédé selon l'une quelconque revendication précédente, dans lequel l'agent initiateur n'est pas activé pendant l'étape consistant à chauffer la composition de silicone à la première température souhaitée pendant la première période de temps.

5. Procédé selon l'une quelconque revendication précédente, dans lequel la composition de silicone est un système à deux composants comprenant un premier composant qui comprend le catalyseur d'hydrosilylation métallique et l'alcényl-siloxane, et un deuxième composant qui comprend l'hydrogéno-siloxane et l'agent initiateur.

6. Procédé selon l'une quelconque revendication précédente, dans lequel la première période de temps va de 120 à 450 secondes.

7. Procédé selon la revendication 2 ou l'une quelconque des revendications 3 à 6 prise en dépendance de la revendication 2, dans lequel la deuxième période de temps va de 5 à 45 minutes.

8. Procédé selon la revendication 2 ou l'une quelconque des revendications 3 à 7 prise en dépendance de la revendication 2, dans lequel le substrat conducteur comprend un alliage ou un métal et/ou est une barre omnibus.

9. Procédé selon la revendication 2 ou l'une quelconque des revendications 3 à 8 prise en dépendance de la revendication 2, dans lequel la couche isolante a une adhérence au substrat conducteur d'au moins 13,8 kPa (2,0 psi) telle que mesurée selon ASTM D413.

10. Procédé selon l'une quelconque revendication précédente, dans lequel le substrat souple est un textile qui comprend des fibres telles que des fibres de verre.

11. Article comprenant une couche isolante disposée sur un substrat conducteur, ladite couche isolante comprenant un substrat souple revêtu avec le produit de réaction de :
• un intermédiaire de réaction partiellement durci comportant des groupes alcényle n'ayant pas réagi ; et
• un agent initiateur,
dans lequel l'intermédiaire de réaction partiellement durci est non bloquant.

12. Article selon la revendication 11, dans lequel ledit intermédiaire de réaction partiellement durci comprend le produit de réaction de :
• un alcényl-siloxane ;
• un catalyseur d'hydrosilylation métallique ; et,
• un hydrogéno-siloxane.

13. Article selon l'une quelconque des revendications 11 et 12, dans lequel ledit substrat conducteur comprend un alliage ou un métal et/ou est une barre omnibus.

14. Article selon l'une quelconque des revendications 11 à 13, dans lequel ladite couche isolante a une adhérence audit substrat conducteur d'au moins 13,8 kPa (2,0 psi) telle que mesurée selon ASTM D413.

15. Article selon l'une quelconque des revendications 11 à 14, dans lequel ledit substrat souple est un textile qui comprend des fibres telles que des fibres de verre.

16. Article selon l'une quelconque des revendications 11 à 15, dans lequel ledit agent initiateur comprend un peroxyde organique.

17. Ruban adhésif durcissable comprenant :
• un substrat souple revêtu d'un intermédiaire de réaction partiellement durci comportant des groupes alcényle n'ayant pas réagi, dans lequel l'intermédiaire de réaction partiellement durci est non bloquant.

18. Ruban adhésif durcissable selon la revendication 17, dans lequel ledit intermédiaire de réaction partiellement durci est le produit de réaction d'une composition de silicone qui comprend :
• un alcényl-siloxane,
• un catalyseur d'hydrosilylation métallique,
• un hydrogéno-siloxane, et
• un agent initiateur.

19. Ruban adhésif durcissable selon l'une quelconque des revendications 17 et 18, dans lequel ledit substrat souple est un textile qui comprend des fibres telles que des fibres de verre.
